(19) **Europäisches Patentamt / European Patent Office / Office européen des brevets**

(11) **EP 4 769 609 A1**

(12) **EUROPEAN PATENT APPLICATION**
published in accordance with Art. 153(4) EPC

(43) Date of publication:
01.07.2026 Bulletin 2026/27

(21) Application number: 24913518.7

(22) Date of filing: 23.12.2024

(51) International Patent Classification (IPC):
$H01M\ 10/052\ ^{(2010.01)}$   $H01M\ 4/525\ ^{(2010.01)}$
$H01M\ 4/505\ ^{(2010.01)}$   $H01M\ 4/587\ ^{(2010.01)}$
$H01M\ 4/62\ ^{(2006.01)}$   $C30B\ 29/22\ ^{(2006.01)}$

(52) Cooperative Patent Classification (CPC):
C30B 29/22; H01M 4/02; H01M 4/36; H01M 4/505;
H01M 4/525; H01M 4/587; H01M 4/62;
H01M 10/052; H01M 10/0525

(86) International application number:
PCT/KR2024/020979

(87) International publication number:
WO 2025/143725 (03.07.2025 Gazette 2025/27)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.12.2023 KR 20230191346

(71) Applicant: **LG ENERGY SOLUTION, LTD.**
**Seoul 07335 (KR)**

(72) Inventors:
• **JEON, Seo Young**
**Daejeon 34122 (KR)**

• **KIM, Jong Seon**
**Daejeon 34122 (KR)**
• **PARK, Ji Min**
**Daejeon 34122 (KR)**
• **SUNG, Joo Hwan**
**Daejeon 34122 (KR)**
• **LEE, Min Wook**
**Daejeon 34122 (KR)**
• **YOUN, Hee Chang**
**Daejeon 34122 (KR)**

(74) Representative: **Plasseraud IP**
**104 Rue de Richelieu**
**CS92104**
**75080 Paris Cedex 02 (FR)**

(54) **LITHIUM SECONDARY BATTERY**

(57) The present invention relates to a lithium secondary battery including a positive electrode including a positive electrode active material layer which includes a single-particle type positive electrode active material, a positive electrode conductive material, a positive electrode binder, and a positive electrode dispersant, a negative electrode, and an electrolyte, wherein the negative electrode includes a first negative electrode active material layer formed on a negative electrode current collector and including a first negative electrode active material, a first negative electrode conductive material, and a first negative electrode binder, and a second negative electrode active material layer formed on the first negative electrode active material layer and including a second negative electrode active material, a second negative electrode conductive material, and a second negative electrode binder, wherein the ratio of the content of the first negative electrode binder to the content of the second negative electrode binder is 1.5 to 3.0, and the difference in porosity between the positive electrode and the negative electrode is 4.2% to 9.8%, and the positive electrode has a value of FBR, which is defined by Equation 1 below, of 30 to 180.

[Equation 1]

$$FBR = [(Rb \times TDb) + (Rd \times TDd)] \times A^2$$

In Equation 1 above, Rb is a dimensionless number of the weight% of the positive electrode binder with respect to the

**(Cont. next page)**

total weight of the positive electrode active material layer, Rd is a dimensionless number of the weight % of the positive electrode dispersant with respect to the total weight of the positive electrode active material layer, TDb is a dimensionless number of the true density (g/cc) of the positive electrode binder, TDd is a dimensionless number of the true density (g/cc) of the positive electrode dispersant, and A is a dimensionless number of the average particle diameter ($D_{50}$, $\mu$m) of the positive electrode active material.

**Description**

## TECHNICAL FIELD

## Cross-reference to related applications

This application claims the benefit of Korean Patent Application No. 10-2023-0191346, filed on December 26, 2023, in the Korean Intellectual Property Office, the disclosure of which is incorporated herein in its entirety by reference.

## Field of the Invention

The present invention relates to a lithium secondary battery.

## BACKGROUND ART

Demands for the use of alternative energy or clean energy are increasing due to the rapid increase in the use of fossil fuel, and as a part of this trend, the most actively studied field is a field of electricity generation and electricity storage using an electrochemical reaction.

Currently, a typical example of an electrochemical device using such electrochemical energy is a secondary battery and the usage areas thereof are increasing more and more. In recent years, as technology development of and demand for portable devices such as portable computers, mobile phones, and cameras have increased, demands for secondary batteries as an energy source have been significantly increased, and among such secondary batteries, lithium secondary batteries are in the spotlight due to having a high operating voltage and a very high energy density.

A lithium secondary battery is generally manufactured by interposing a separator between a positive electrode including a positive electrode active material composed of a transition metal oxide containing lithium, and a negative electrode including a negative electrode active material capable of storing lithium ions, thereby providing an electrode assembly, inserting the electrode assembly into a battery case, injecting thereto a non-aqueous electrolyte, which is a medium for transferring the lithium ions, and then sealing the battery case. The non-aqueous electrolyte is generally composed of a lithium salt, and an organic solvent capable of dissolving the lithium salt.

Recently, as the demand for secondary batteries with high energy density, such as batteries for electric vehicles, has increased, the development of high-voltage secondary batteries driven at high voltages has been actively conducted.

Meanwhile, in order to shorten the charging time, which is the biggest obstacle to the commercialization of electric vehicles, the demand for lithium secondary batteries with excellent rapid charging performance has been increased. However, rapid charging batteries developed so far have not shown satisfactory performance in terms of lifespan properties and energy density.

Therefore, there is a need for the development of lithium secondary batteries capable of improving rapid charging performance of a battery and minimizing degradation in lifespan properties or energy density.

## DISCLOSURE OF THE INVENTION

## TECHNICAL PROBLEM

An aspect of the present invention provides a lithium secondary battery including a positive electrode in which the average particle size of a positive electrode active material, the content of a positive electrode binder and a positive electrode dispersant, and the true density of the positive electrode binder and the positive electrode dispersant satisfy specific conditions, and a negative electrode in which the composition of a negative electrode active material and the distribution of a negative electrode binder are adjusted, wherein the difference in porosity between the positive electrode and the negative electrode is adjusted to a specific range, so that rapid charging performance, lifespan properties, and energy density properties are improved.

## TECHNICAL SOLUTION

[1] The present invention provides a lithium secondary battery including a positive electrode including a positive electrode active material layer which includes a single-particle type positive electrode active material, a positive electrode conductive material, a positive electrode binder, and a positive electrode dispersant, a negative electrode, and an electrolyte, wherein the negative electrode includes a first negative electrode active material layer formed on a negative electrode current collector and including a first negative electrode active material, a first negative electrode conductive material, and a first negative electrode binder, and a second negative electrode active material layer formed on the first negative electrode active material layer and including a second negative electrode active material, a second negative electrode conductive material, and a second negative electrode binder, wherein the ratio of the content of the first negative electrode binder to the content of the second negative electrode binder is 1.5 to 3.0, and the difference in porosity between the positive electrode and the negative electrode is 4.2% to 9.8%, and the positive electrode has a value of FBR, which is defined by Equation 1 below, of 30 to 180.

$$[\text{Equation 1}]$$

$$FBR = [(Rb \times TDb) + (Rd \times TDd)] \times A^2$$

In Equation 1 above, Rb is a dimensionless number of the weight% of the positive electrode binder with respect to the total weight of the positive electrode active material layer, Rd is a dimensionless number of the weight % of the positive electrode dispersant with respect to the total weight of the positive electrode active material layer, TDb is a dimensionless number of the true density (g/cc) of the positive electrode binder, TDd is a dimensionless number of the true density (g/cc) of the positive electrode dispersant, and A is a dimensionless number of the average particle diameter ($D_{50}$, $\mu$m) of the single-particle type positive electrode active material.

[2] In [1] above, the present invention provides a lithium secondary battery, wherein the single-particle type positive electrode active material includes a lithium nickel-based oxide including Ni in an amount of 70 mol% or less based on the total number of moles of metals excluding lithium.

[3] In [1] or [2] above, the present invention provides a lithium secondary battery, wherein the single-particle type positive electrode active material includes a lithium nickel-based oxide represented by [Formula 1] below.

$$[\text{Formula 1}] \qquad Li_{1+x}[Ni_aCo_bMn_cM^1_d]O_2$$

In [Formula 1] above, $M^1$ includes one or more elements selected from the group consisting of Ti, Mg, Al, Zr, Y, Ba, Ca, Sr, W, Ta, Nb, and Mo, and $-0.1 \leq x \leq 0.1$, $0.5 \leq a \leq 0.7$, $0 < b < 0.5$, $0 < c < 0.5$, and $0 \leq d \leq 0.2$.

[4] In at least one among [1] to [3] above, the present invention provides a lithium secondary battery, wherein the single-particle type positive electrode active material has an average particle diameter ($D_{50}$) of 3.5 $\mu$m to 7.8 $\mu$m.

[5] In at least one among [1] to [4] above, the present invention provides a lithium secondary battery, wherein the single-particle type positive electrode active material includes 1 to 30 nodules.

[6] In at least one among [1] to [5] above, the present invention provides a lithium secondary battery, wherein the nodules have an average particle diameter ($D_{mean}$) of 0.8 $\mu$m to 4.0 $\mu$m.

[7] In at least one among [1] to [6] above, the present invention provides a lithium secondary battery, wherein the positive electrode active material layer includes the positive electrode binder in an amount of 0.5 wt% to 2 wt%.

[8] In at least one among [1] to [7] above, the present invention provides a lithium secondary battery, wherein the positive electrode has a porosity of 20% to 25%.

[9] In at least one among [1] to [8] above, the present invention provides a lithium secondary battery, wherein the first negative electrode active material and the second negative electrode active material each independently consist of natural graphite, artificial graphite, or a combination thereof.

[10] In at least one among [1] to [9] above, the present invention provides a lithium secondary battery, wherein the first negative electrode active material includes the natural graphite in an amount of greater than 50 wt%, and the second negative electrode active material includes the natural graphite in an amount of less than 50 wt%.

[11] In at least one among [1] to [10] above, the present invention provides a lithium secondary battery, wherein the ratio of the content of the first negative electrode binder to the content of the second negative electrode binder is 1.6 to 2.4.

[12] In at least one among [1] to [11] above, the present invention provides a lithium secondary battery, wherein the first negative electrode active material layer includes the first negative electrode binder in an amount of 1.5 wt% to 3.0 wt%.

[13] In at least one among [1] to [12] above, the present invention provides a lithium secondary battery, wherein the negative electrode has a value of QBR, which is defined by Equation 2 below, of 1.1 to 1.28.

$$[\text{Equation 2}]$$

$$QBR = Bs \: / \: Bf$$

The Bs is an average value of the binder content in a surface region of the negative electrode active material layer from the outermost surface of the second negative electrode active material layer to within 15% of the total thickness of the negative electrode active material layer, and the Bf is an average value of the binder content in a bottom region of the negative electrode active material layer from an interface of the first negative electrode active material layer in contact with the negative electrode current collector to within 15% of the total thickness of the negative electrode active material layer.

[14] In at least one among [1] to [13] above, the present invention provides a lithium secondary battery, wherein the negative electrode has a porosity of 25% to 32%.

[15] In at least one among [1] to [14] above, the present invention provides a lithium secondary battery, wherein the difference in porosity between the positive electrode and the negative electrode is 6% to 8%.

## ADVANTAGEOUS EFFECTS

The present invention includes a positive electrode in which the average particle size of a positive electrode active material, the content of a positive electrode binder and a positive electrode dispersant, and the true density of the positive electrode binder and the positive electrode dispersant satisfy specific conditions, and a negative electrode including a multi-layered negative electrode active material layer including a first negative electrode active material layer (lower layer) and a second negative electrode active material layer (upper layer) formed on the first negative electrode active material layer, in which the composition of a negative electrode active material and the distribution of a negative electrode binder are different, respectively, wherein the difference in porosity between the positive electrode and the negative electrode satisfies a specific range. By including the positive electrode which satisfies specific conditions, the initial capacity, initial resistance, and lifespan properties of a lithium secondary battery are improved, and at the same time, by lowering the ratio of natural graphite and increasing the ratio of artificial graphite, which are included in the upper layer of the negative electrode active material layer, the initial resistance and rapid charging performance are improved, and by increasing the ratio of natural graphite included in the lower layer of the negative electrode active material layer, adjusting the ratio of the negative electrode binder, and adjusting the difference in porosity between the positive electrode and the negative electrode to be suitable, a lithium secondary battery with excellent rapid charging performance and excellent electrochemical performance, such as lifespan properties, may be implemented.

## DETAILED DESCRIPTION OF THE PREFERRED EMBODIMENT

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

The terms used herein are for the purpose of describing embodiments and are not intended to be limiting of the present invention. In the present specification, singular forms include plural forms unless the context clearly indicates otherwise.

In the present specification, when a portion is said to include a certain element, it means that the portion may further include another element rather than excluding another element unless otherwise stated.

In the present invention, a "single-particle type positive electrode active material" means a positive electrode active material particle composed of 30 or fewer sub-particles. A sub-particle unit constituting the above-described single-particle type positive electrode active material will be referred to as a "nodule." The single-particle type positive electrode active material includes a single particle composed of one single nodule and a pseudo-single particle, which is a composite of 30 or fewer nodules.

The "nodule" refers to a sub-particle unit body constituting a single particle and a pseudo-single particle, wherein the nodule may be a single crystal with no crystalline grain boundaries, or may be a polycrystal with no grain boundaries in appearance when observed in a range of vision of 5,000 to 20,000 times using a scanning electron microscope (SEM).

In the present invention, a "secondary particle" means a particle formed by aggregation of more than 30 sub-particles. Each sub-particle unit body constituting the above-described secondary particle will be referred to as a "primary particle," in order to distinguish the same from a sub-particle constituting the single-particle type positive electrode active material particle.

The expression "particle" used in the present invention may include any one or all of a single particle, a pseudo-single particle, a primary particle, a nodule, and a secondary particle.

In the present specification, an "average particle diameter ($D_{mean}$)" of nodules or primary particles refers to an arithmetic mean value of measured values after respectively measuring the particle diameters of nodules or primary particles observed in SEM images obtained by analysis using a scanning electron microscope.

In the present specification, an "average particle diameter ($D_{50}$)" refers to a particle size corresponding to 50% of a cumulative volume of the volume cumulative particle size distribution of powder to be measured, and may be measured using a laser diffraction method. For example, the average particle diameter ($D_{50}$) may be measured by dispersing powder to be measured in a dispersion medium, and then introducing the mixture into a commercially available laser diffraction particle size measurement device (e.g., Microtrac MT 3000) to be irradiated with an ultrasonic wave of about 28 kHz to an output of 60 W, thereby obtaining a volume cumulative particle size distribution graph, and then obtaining a particle size corresponding to 50% of a cumulative volume.

In the present specification, a "porosity (%)" may be calculated as 1 - (density of electrode density/true density of electrode).

In the present specification, a "true density" may be measured by using a gas pycnometer. The gas pycnometer is a device that can measure the density of a sample by placing a measurement sample the weight of which is known into a sample chamber, and then injecting a helium or nitrogen gas thereinto to find out the volume occupied by the sample, excluding pores. Specifically, after the volume of the sample is measured from a change in pressure between the sample chamber into which the sample is placed and a reference chamber the volume of which is known, and the ideal gas equation (PV=nRT) is applied to calculate the density value of the sample.

In the present specification, "QBR" may be calculated through an SEM image obtained by analysis using a scanning electron microscope.

A lithium secondary battery according to the present invention include at least one among configurations disclosed below, and may include any combination of technically possible configurations among the following configurations.

As a result of repeated research to develop a lithium secondary battery having excellent rapid charging performance and minimized degradation in lifespan properties, the present inventors have found out that in the case of a lithium secondary battery including a negative electrode of a multi-layered structure including a negative electrode current collector, a first negative electrode active material layer formed on the negative electrode current collector, and a second negative electrode active material layer formed on the first negative electrode active material layer, and including a positive electrode in which the content of a positive electrode binder and a positive electrode dispersant, and the average particle diameter ($D_{50}$) of a positive electrode active material satisfy specific conditions, wherein the difference in porosity between the positive electrode and the negative electrode satisfies a specific range, the rapid charging performance may be excellent, and the degradation in cell performance during a long-term cycle may be suppressed, and have completed the present invention.

Hereinafter, the present invention will be described in detail.

**Lithium secondary battery**

A lithium secondary battery according to the present invention includes a positive electrode including a positive electrode active material layer which includes a single-particle type positive electrode active material, a positive electrode conductive material, a positive electrode binder, and a positive electrode dispersant, a negative electrode, and an electrolyte, wherein the negative electrode includes a first negative electrode active material layer formed on a negative electrode current collector and including a first negative electrode active material, a first negative electrode conductive material, and a first negative electrode binder, and a second negative electrode active material layer formed on the first negative electrode active material layer and including a second negative electrode active material, a second negative electrode conductive material, and a second negative electrode binder, wherein the first negative electrode active material and the second negative electrode active material each independently include natural graphite, artificial graphite, or a combination thereof, and the ratio of the content of the first negative electrode binder to the content of the second negative electrode binder is 1.5 to 3.0, and the difference in porosity between the positive electrode and the negative electrode is 4.2% to 9.8%, and the positive electrode has a value of FBR, which is defined by Equation 1 below, satisfying 30 to 180.

$$[\text{Equation 1}]$$

$$FBR = [(Rb \times TDb) + (Rd \times TDd)] \times A^2$$

In Equation 1 above, Rb is the weight% of the positive electrode binder with respect to the total weight of the positive electrode active material layer, Rd is the weight % of the positive electrode dispersant with respect to the total weight of the positive electrode active material layer, TDb is the true density (g/cc) of the positive electrode binder, TDd is the true density (g/cc) of the positive electrode dispersant, and A is the average particle diameter ($D_{50}$, $\mu$m) of the positive electrode active material.

According to the research of the present inventors, in the case of a lithium secondary battery including a positive electrode in which the FBR value satisfies a specific range, and a negative electrode of a multi-layered structure including a first negative electrode active material layer formed on a negative electrode current collector, and a second negative electrode active material layer formed on the first negative electrode active material layer, it has been shown that the cell resistance and rapid charging performance are excellent, and the degradation in cell performance during a long-term cycle is suppressed.

Meanwhile, the difference in porosity between the positive electrode and the negative electrode is 4.2% to 9.8%. Specifically, the difference in porosity between the positive electrode and the negative electrode may be 4.2% or greater, 4.5% or greater, 4.8% or greater, 5% or greater, 5.2% or greater, 5.5% or greater, 5.8% or greater, 6% or greater, 6.2% or greater, 6.5% or greater, 6.8% or greater, 7% or greater, 7.2% or greater, 7.5% or greater, 7.8% or greater, 8% or greater, 9.8% or less, 9.5% or less, 9.2% or less, 9% or less, 8.8% or less, 8.5% or less, 8.2% or less, 8% or less, 7.8% or less, 7.5% or less, 7.2% or less, 7% or less, 6.8% or less, 6.5% or less, 6.2% or less, or 6% or less. For example, the difference in porosity between the positive electrode and the negative electrode is 4.2% to 9.8%, 4.5% to 9.5%, 5% to 9%, 5.5% to 8.5%, or 6% to 8%. If the difference in porosity between the positive electrode and the negative electrode satisfies the above-described range, the battery volume according to the electrode thickness is optimized, so that the energy density may be improved, and when lithium ion moves from the positive electrode to the negative electrode, the diffusion resistance of the lithium ions in the positive electrode is reduced and the lithium ions are easily intercalated in the negative electrode, so that rapid charging properties may be improved, and also, the resistance of the battery is lowered, and the structural stability of the negative electrode and the positive electrode may be improved, so that the effect of improving adhesive force of the negative electrode and improving lifespan properties may be more excellent.

According to the present invention, only if the ratio of the content of the first negative electrode binder to the content of the second negative electrode binder is 1.5 to 3.0, and the difference in porosity between the positive electrode and the negative electrode satisfies a range of 4.2% to 9.8%, while simultaneously satisfying an FBR value of 30 to 180 as defined by Equation 1 above, an effect of shortening the rapid charging time, an effect of improving capacity properties, an effect of reducing initial resistance, and an effect of improving lifespan properties may be simultaneously implemented.

Hereinafter, each component of the lithium secondary battery according to the present invention will be described in more detail.

**Positive electrode**

The lithium secondary battery according to the present invention may include a positive electrode which includes a positive electrode active material layer and a positive electrode current collector. Specifically, the positive electrode includes a positive electrode active material layer which includes a positive electrode active material including single-particle type particles, a positive electrode conductive material, a positive electrode binder, and a positive electrode dispersant, wherein FBR defined by Equation 1 below may be 30 to 180, preferably 35 to 180, and more preferably 40 to 175.

$$[\text{Equation 1}]$$

$$FBR = [(Rb \times TDb) + (Rd \times TDd)] \times A^2$$

In Equation 1 above, Rb is the weight% of the positive electrode binder with respect to the total weight of the positive electrode active material layer, Rd is the weight % of the positive electrode dispersant with respect to the total weight of the positive electrode active material layer, TDb is the true density (g/cc) of the positive electrode binder, TDd is the true density (g/cc) of the positive electrode dispersant, and A is the average particle diameter ($D_{50}$, μm) of the positive electrode active material.

If the FBR satisfies the range of the present invention, an effect of improving initial capacity, initial resistance, and lifespan properties of the lithium secondary battery may be obtained. Specifically, if the FBR is less than 30, the energy density and cell stability may be degraded, and if the FBR is greater than 180, the cell resistance is increased, so that there may be problems in that the output performance is degraded, and the rapid charging performance is degraded.

Meanwhile, the positive electrode current collector is not particularly limited as long as it has conductivity without causing a chemical change in a battery, and for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 μm to 500 μm, and microscopic irregularities may be formed on the surface of the current collector to improve the adhesive force of the positive electrode active material. For example, the positive electrode current collector may be used in various forms such as a film, a sheet, a foil, a net, a porous body, a foam, and a non-woven body.

The positive electrode active material according to the present invention may include a lithium nickel-based oxide including Ni in an amount of 70 mol% or less based on the total number of moles of metals excluding lithium. Specifically, the positive electrode active material may include Ni in an amount of 50 mol% to 70 mol%, preferably 55 mol% to 70 mol%, and more preferably 60 mol% to 70 mol%. As described above, if a positive electrode active material having a relatively low Ni content is used, the contact area with an electrolyte solution is small, so that high energy density may be implemented by stable driving at a high voltage of 4.35 V or higher, and side reactions with the electrolyte solution are suppressed, resulting in reduced gas generation, and degradation in cell performance due to agglomeration of a conductive material may be suppressed, so that the rapid charging performance may be improved.

More specifically, the positive electrode active material may include a lithium nickel-based oxide represented by [Formula 1].

$$[\text{Formula 1}] \qquad Li_{1+x}[Ni_aCo_bMn_cM^1_d]O_2$$

In [Formula 1] above, $M^1$ may include one or more doping elements selected from the group consisting of Ti, Mg, Al, Zr, Y, Ba, Ca, Sr, W, Ta, Nb, and Mo, and preferably, may be one or more doping elements selected from the group consisting of Al, W, Y, Ba, Ca, Ti, Mg, and Nb. The $M^1$ element may or may not be selectively included in the lithium nickel-based oxide, and if included, the $M^1$ element may promote particle growth or improve structural stability during firing of the positive electrode.

Meanwhile, the 1+x represents the molar ratio of lithium in the lithium nickel-based oxide, wherein - $0.1 \leq x \leq 0.1$, $0 \leq x \leq 0.1$, or $0 \leq x \leq 0.07$. If the x satisfies the above-described range, a stable layered crystal structure may be formed.

The a represents the molar ratio of nickel in all metals excluding lithium in the lithium nickel-based oxide, wherein $0.5 \leq a \leq 0.7$, $0.55 \leq a \leq 0.7$, or $0.55 \leq a \leq 0.65$. If the a satisfies the above-described range, structural stability may be secured during charging and discharging to suppress positive electrode deterioration, and a high energy density may be implemented.

The b is the molar ratio of cobalt in all metals excluding lithium in the lithium nickel-based oxide, wherein $0 < b < 0.5$, $0.03 \leq b \leq 0.4$, $0.05 \leq b \leq 0.3$, or $0.08 \leq b \leq 0.15$. If the b satisfies the above-described range, good resistance properties and output properties may be implemented, and the molar ratio of manganese may be relatively increased, so that structural stability may be improved.

The c is the molar ratio of manganese in all metals excluding lithium in the lithium nickel-based oxide, wherein $0 < c < 0.5$, $0.1 \leq c \leq 0.45$, $0.15 \leq c \leq 0.4$, $0.2 \leq c \leq 0.35$, or $0.25 \leq c \leq 0.35$. If the c satisfies the above-described range, the structural stability of the positive electrode active material may be excellent.

The d is the molar ratio of the $M^1$ element in all metals excluding lithium in the lithium nickel-based oxide, wherein $0 \leq d \leq 0.2$, $0 \leq d \leq 0.1$, $0 \leq d \leq 0.05$, or $d = 0$. The $M^1$ element is not necessarily included as a doping element, but if included in an appropriate amount, the $M^1$ element may serve to promote particle growth during firing or improve stability of a crystal structure.

Meanwhile, the single-particle type positive electrode active material may have an average particle diameter $(D_{50})$ of 3.0 $\mu$m to 7.9 $\mu$m, preferably 3.5 $\mu$m to 7.8 $\mu$m, and more preferably 3.7 $\mu$m to 7.6 $\mu$m. If the average particle diameter of the positive electrode active material is too small, processability may be reduced during positive electrode manufacturing, and electrolyte solution wettability may be reduced, so that electrochemical properties may be increased, and if the average particle diameter is too large, resistance may be increased, and output properties may be degraded.

Meanwhile, it is preferable that the single-particle type positive electrode active material includes 1 to 30, preferably 1 to 25, and more preferably 1 to 15 nodules in a particle. This is because if the number of nodules constituting the positive electrode active material particle is greater than 30, particle breakage may be increased during electrode manufacturing, and internal cracking may be increased due to volume expansion/contraction of the nodules during charging and discharging, so that lifespan properties may be degraded.

Meanwhile, the nodule may have an average particle diameter $(D_{mean})$ of 0.8 $\mu$m to 4.0 $\mu$m, preferably 0.8 $\mu$m to 3.0 $\mu$m, and more preferably 1.0 $\mu$m to 3.0 $\mu$m. If the average particle diameter of the nodules satisfies the above-described range, particle breakage may be minimized during electrode manufacturing, and resistance increase may be more effectively suppressed.

Meanwhile, the positive electrode active material layer may further include a positive electrode conductive material, a positive electrode binder, and a positive electrode dispersant in addition to the single-particle type positive electrode active material.

At this time, the positive electrode conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.4 wt% to 10 wt%, preferably 0.4 wt% to 7 wt%, and more preferably 0.4 wt% to 5 wt%, based on the total weight of the positive electrode active material layer. If the content of the conductive material satisfies the above-described range, excellent conductivity and capacity of the positive electrode may be implemented.

Meanwhile, the positive electrode binder serves to improve the bonding between positive electrode active material particles and the adhesive force between the positive electrode active material and the positive electrode current collector. Specific examples thereof may include polyvinylidene fluoride (PVdF), a vinylidene fluoride-hexafluoropropylene copolymer (PVdF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The positive electrode binder may be included in an amount of 0.5 wt% to 2 wt%, preferably 1 wt% to 2 wt%, and more preferably 1.5 wt% to 2 wt%, based on the total weight of the positive electrode active material layer. If the content of the positive electrode binder satisfies the above-described range, the adhesive force between the current collector and the positive electrode active material layer is high, so that excellent capacity properties and lifespan properties may be implemented even after a long-term cycle.

Meanwhile, the positive electrode dispersant is to improve dispersibility of the lithium nickel-based oxide, the conductive material, and the like, and for example, hydrogenated nitrile-butadiene rubber (H-NBR) or the like may be used, but the positive electrode dispersant is not limited thereto. The dispersant may be included in an amount of 2 wt% or less, preferably 0.1 wt% to 2 wt%, and more preferably 0.1 wt% to 0.5 wt%, based on the total weight of the positive electrode active material layer. If the content of the dispersant is too low, the effect of improving the dispersibility is insignificant, and if too high, the battery performance may be adversely affected thereby.

Meanwhile, the positive electrode may have a porosity of 20 % to 25 %, 20.5 % to 25 %, 21 % to 25 %, or 21% to 23%. If the positive electrode porosity satisfies the above-described range, the positive electrode is thin, and thus, when applied to a battery, the battery volume is reduced, so that the energy density may be improved.

Meanwhile, the positive electrode may be manufactured according to a typical method for manufacturing a positive electrode. For example, the positive electrode may be manufactured by preparing a positive electrode slurry by mixing a positive electrode active material, a positive electrode binder and/or a positive electrode conductive material in a solvent, and applying, followed by drying and roll-pressing, the positive electrode slurry on a positive electrode current collector, or by casting the positive electrode slurry on a separate support, and then laminating, on a positive electrode current collector, a film peeled off the support.

At this time, as the solvent of the positive electrode slurry, solvents commonly used in the art may be used, and for example, dimethylsulfoxide (DMSO), isopropyl alcohol, N-methylpyrrolidone (NMP), acetone, water, and the like may be used alone, or two or more thereof may be mixed and used. The solvent may be used in an amount sufficient to dissolve or disperse the positive electrode active material, the positive electrode conductive material, and the positive electrode binder in consideration of the application thickness and preparation yield of the slurry, and thereafter, to allow the slurry to have a viscosity which may exhibit excellent thickness uniformity when applied for the manufacturing of the positive electrode.

**Negative electrode**

The lithium secondary battery according to the present invention may include a negative electrode including a negative electrode active material, a negative electrode conductive material, and a negative electrode binder. Specifically, the negative electrode includes a first negative electrode active material layer formed on a negative electrode current collector and including a first negative electrode active material, a first negative electrode conductive material, and a first negative electrode binder, and a second negative electrode active material layer formed on the first negative electrode active material layer and including a second negative electrode active material, a second negative electrode conductive material, and a second negative electrode binder, wherein the first negative electrode active material and the second negative electrode active material may each independently include natural graphite, artificial graphite, or a combination thereof.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 $\mu$m to 500 $\mu$m, and as in the case of the positive electrode current collector, microscopic irregularities may be formed on the surface of the negative electrode current collector to improve the binding force of the negative electrode active material. For example, the negative electrode current collector may be used in various forms such as a film, a sheet, a foil, a net, a porous body, a foam, a non-woven body, and the like.

The first negative electrode active material and the second negative electrode active material may each independently include natural graphite, artificial graphite, or a combination thereof.

At this time, the first negative electrode active material may include the natural graphite in an amount of greater than 50 wt%, greater than 50 wt% and 100 wt% or less, preferably 55 wt% to 100 wt%, and the second negative electrode active material may include the natural graphite in an amount of less than 50 wt%, 0 wt% to less than 50 wt%, and 0 wt% to 45 wt%. If the above-described range is satisfied, the ratio of the natural graphite included in the first negative electrode active material layer is high, and the ratio of the artificial graphite included in the second negative electrode active material layer is high, so that the cell resistance may be lowered, and the initial capacity expression rate may be improved to improve the energy density.

Meanwhile, the first negative electrode conductive material and the second negative electrode conductive material may be the same as those described above in the positive electrode.

Also, the first negative electrode binder and the second negative electrode binder serve to improve the bonding between negative electrode active material particles and the adhesive force between the negative electrode active material and the negative electrode current collector, and specific examples thereof may be the same as those described above in the positive electrode.

Meanwhile, the ratio of the content of the first negative electrode binder to the content of the second negative electrode binder may be 1.5 to 3.0, preferably 1.5 to 2.8, and more preferably 1.6 to 2.4.

At this time, the first negative electrode active material layer may include the first negative electrode binder in an amount of 1.5 wt% to 3.0 wt%, preferably 1.5 wt% to 2.8 wt%, and more preferably 1.6 wt% to 2.4 wt%.

If the above-described range is satisfied, the ratio of the first negative electrode binder included in the first negative electrode active material layer in contact with the negative electrode current collector is increased, so that the adhesive force between the negative electrode current collector and the first negative electrode active material layer may be improved, and the structural collapse of the negative electrode active material is suppressed by the binder, so that the lifespan properties may be significantly improved.

Meanwhile, the negative electrode according to the present invention may have a value of Quantified Binder Ratio (QBR), which is defined by Equation 2 below, of 1.1 to 1.28, preferably 1.1 to 1.26, and more preferably 1.1 to 1.24.

$$[\text{Equation 2}]$$

$$QBR = Bs / Bf$$

The Bs shows an average value of the binder content in a surface region of the negative electrode active material layer from the outermost surface of the second negative electrode active material layer to within 15% of the total thickness of the negative electrode active material layer, and the Bf shows an average value of the binder content in a bottom region of the negative electrode active material layer from an interface of the first negative electrode active material layer in contact with the negative electrode current collector to within 15% of the total thickness of the negative electrode active material layer.

At this time, the value of QBR may be calculated as follows.

Argon ion milling is used to produce a cross-section of the negative electrode. Thereafter, an energy dispersive X-ray spectroscopy (EDS) detector of scanning electron microscope (SEM) equipment is used to perform EDS mapping on the components in the negative electrode active material layer of the produced negative electrode cross-section.

From the EDS mapping results, a line profile is extracted in the thickness direction of the negative electrode active material layer, and from the extracted line profile results, an average value Bs of the binder content of the surface region of the negative electrode active material layer and an average value Bf of the binder content of the bottom region of the negative electrode active material layer are extracted, and the value of QBR is calculated.

The value of QBR is a numerical value indicating uniformity of distribution of binders in the thickness direction within the entire negative electrode active material layer through the ratio of the content of a binder included in the surface region with respect to the content of a binder contained in the bottom region of the entire negative electrode active material layer.

If the value of QBR satisfies the above-described range, when negative electrode binders having the same ratio are introduced, the negative electrode binders are appropriated distributed in the negative electrode, so that there is an effect of improving lifespan properties since side reactions are suppressed due to uniform charging and discharging even after a long-term cycle during the evaluation of the lifespan properties.

Meanwhile, the negative electrode may have a porosity of 25% to 32%, 25% to 31%, 25.5% to 31%, 27% to 30.5%, or 28% to 30%. If the negative electrode porosity satisfies the above-described range, lithium migration is facilitated, so that cell resistance properties are excellent, and volume expansion caused by continuous deterioration of the negative electrode active material is buffered through voids, thereby improving swelling properties, so that the lifespan properties may be improved.

As described above, in the lithium secondary battery according to the present invention, the negative electrode active material layer may have a multi-layered structure of two or more layers including a first negative electrode active material layer and a second negative electrode active material layer.

As described above, if the negative electrode active material layer has a multi-layered structure composed of two or more layers, each layer may have different types and/or contents of a negative electrode active material, a binder, and/or a conductive material.

For example, the weight ratio of natural graphite to the total weight of the negative electrode active material in the first negative electrode active material layer (lower layer) may be formed to be higher than the weight ratio of natural graphite to the total weight of the negative electrode active material in the second negative electrode active material layer (upper layer), and the weight ratio of artificial graphite to the total weight of the negative electrode active material in the second negative electrode active material layer may be formed to be higher than the weight ratio of the artificial graphite to the total weight of the negative active material in the first negative electrode active material layer.

Alternatively, the weight ratio of the first negative electrode binder with respect to the total weight of the first negative electrode active material layer (the lower layer) may be formed to be higher than the weight ratio of the second negative electrode binder with respect to the total weight of the second negative electrode active material layer (the upper layer).

By forming the negative electrode active material layer in a multi-layered structure as described above, and by varying the composition of each layer, it is possible to further improve performance properties of a battery, such as rapid charging performance and lifespan properties.

The negative electrode may be manufactured according to a typical method for manufacturing a negative electrode. For example, the negative electrode may be manufactured by preparing a negative electrode slurry by mixing a negative electrode active material, a negative electrode binder and/or a negative electrode conductive material in a solvent, and applying, followed by drying and roll-pressing, the negative electrode slurry on a negative electrode current collector, or by casting the negative electrode slurry on a separate support, and then laminating, on a negative electrode current collector, a film peeled off the support.

Meanwhile, as the solvent of the negative electrode slurry, solvents commonly used in the art may be used, and the specific content thereof is the same as that of the solvent of the positive electrode slurry.

**Separator**

The lithium secondary battery according to the present invention may include, if necessary, a separator between the positive electrode and the negative electrode. The separator is to separate the negative electrode and the positive electrode and to provide a movement path for lithium ions, and any separator may be used without particular limitation as long as it is a separator commonly used in a lithium secondary battery, and particularly, a separator having excellent moisture-retention of an electrolyte solution as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

**Electrolyte**

In the lithium secondary battery according to the present invention, the electrolyte may include an organic solvent and a lithium salt.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

As the lithium salt, any compound may be used without particular limitation as long as it can provide lithium ions used in a lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1 M to 4.0 M, preferably 0.5 M to 3.0 M, and more preferably 1.0 M to 2.0 M. If the concentration of the lithium salt is included in the above-described range, the electrolyte has suitable conductivity and viscosity, and thus, may exhibit excellent electrolyte performance, and lithium ions may effectively move.

For purposes of improving the lifespan properties of a battery, suppressing the reduction in battery capacity, improving the discharge capacity of the battery, and the like, the electrolyte may additionally include an additive in addition to the above electrolyte components. As the additive, various additives used in the art, such as fluoro ethylene carbonate (FEC), vinylene carbonate (VC), vinyl ethylene carbonate (VEC), ethylene sulfate (ESa), lithium difluorophosphate ($LiPO_2F_2$), lithium bisoxalato borate (LiBOB), lithium tetrafluoro borate ($LiBF_4$), lithium difluorooxalato borate (LiDFOB), lithium difluorobisoxalato phosphate (LiDFBP), lithium tetrafluorooxalato phosphate (LiTFOP), lithium methyl sulfate (LiMS), lithium ethyl sulfate (LiES), propanesultone (PS), propensultone (PRS), succinonitrile (SN), adiponitrile (AND), 1,3,6-hexane tricarbonitrile (HTCN), 1,4-dicyano-2-butene (DCB), fluorobenzene (FB), ethyldi(pro-2-y-1-yl)phosphate (EDP), 5-methyl-5-propagyloxylcarbonyl-1,3-dioxane-2-one (MPOD), and the like may be used alone or in combination, but the additive is not limited thereto. The additive may be included in an amount of 0.1 wt% to 10 wt%, preferably 0.1 wt% to 5 wt%, based on the total weight of the electrolyte.

The lithium secondary battery according to the present invention as described above may be usefully used in portable devices such as mobile phones, laptop computers, and digital cameras, in electric cars such as a hybrid electric vehicle (HEV), and the like.

Hereinafter, the present invention will be described in more detail with reference to examples. However, the following examples are merely illustrative of the present invention and are not intended to limit the scope of the present invention.

**Example 1**

<Manufacturing of positive electrode>

A positive electrode slurry including a positive active material : a positive electrode conductive material : a positive electrode binder : a positive electrode dispersant at a weight ratio of 97 : 1.2 : 1.44 : 0.36 was prepared. At this time, a single-particle type $Li[Ni_{0.60}Co_{0.10}Mn_{0.30}]O_2$ having an average particle diameter $D_{50}$ of 3.7 $\mu$m was used as the positive electrode active material, and carbon nanotubes (CNT) were used as the positive electrode conductive material. In addition, polyvinylidene fluoride (PVdF) having a true density of 1.77 g/cc was used as the positive electrode binder, and hydrogenated nitrile-butadiene rubber (H-NBR) having a true density of 1.3 g/cc was used as the positive electrode dispersant.

Meanwhile, the positive electrode conductive material, the positive electrode binder, and the positive electrode dispersant were added, in the form of a predispersion dispersed in a dispersion, to a positive electrode slurry solvent (N-methylpyrrolidone). Thereafter, the positive electrode slurry was coated on an aluminum current collector, dried, and then roll-pressed to manufacture a positive electrode. The positive electrode had a porosity of 22%.

<Manufacturing of negative electrode>

A first negative electrode active material (natural graphite) : a first negative electrode conductive material (super C) : a thickener (carboxymethyl cellulose (CMC)) : a first negative electrode binder (styrene butadiene rubber (SBR)) were mixed in water at a weight ratio of 96.9 : 0.5 : 1.0 : 1.6 to prepare a first negative electrode slurry.

A second negative electrode active material (artificial graphite) : a second negative electrode conductive material (super C) : a thickener (carboxymethyl cellulose (CMC)) : a second negative electrode binder (styrene butadiene rubber (SBR)) were mixed in water at a weight ratio of 97.4 : 0.5 : 1.1 : 1.0 to prepare a second negative electrode slurry.

The first negative electrode slurry and the second negative electrode slurry were simultaneously coated on a negative electrode current collector (a copper metal thin film), wherein the first negative electrode slurry was disposed on the negative electrode current collector, and the second negative electrode slurry was disposed on the first negative electrode slurry. Thereafter, the negative electrode current collector coated with the first negative electrode slurry and the second negative electrode slurry was dried and then roll-pressed to manufacture a negative electrode. The negative electrode had a porosity of 30%.

<Manufacturing of lithium secondary battery>

A separator was interposed between the positive electrode and the negative electrode manufactured as described to manufacture one bi-cell having a structure of separator/negative electrode/separator/positive electrode/-separator/negative electrode/separator, and then the bi-cell was wound with a separation film to prepare an electrode assembly, which was then placed a battery case, and an electrolyte solution obtained by dissolving 1 M of $LiPF_6$ in a solvent in which ethylene carbonate : ethylmethyl carbonate : diethylcarbonate were mixed at a ratio of 1 : 1 : 1 was injected into the battery case to manufacture a lithium secondary battery.

**Example 2**

<Manufacturing of negative electrode>

A first negative electrode active material (artificial graphite:natural graphite = 25:75) : a first negative electrode conductive material (super C) : a thickener (carboxymethyl cellulose (CMC)) : a first negative electrode binder (styrene butadiene rubber (SBR)) were mixed in water at a weight ratio of 96.1 : 0.5 : 1.0 : 2.4 to prepare a first negative electrode slurry.

A second negative electrode active material (artificial graphite:natural graphite = 75:25) : a second negative electrode conductive material (super C) : a thickener (carboxymethyl cellulose (CMC)) : a second negative electrode binder (styrene butadiene rubber (SBR)) were mixed in water at a weight ratio of 97.4 : 0.5 : 1.1 : 1.0 to prepare a second negative electrode slurry.

The first negative electrode slurry and the second negative electrode slurry were simultaneously coated on a negative electrode current collector (a copper metal thin film), wherein the first negative electrode slurry was disposed on the negative electrode current collector, and the second negative electrode slurry was disposed on the first negative electrode slurry. Thereafter, the negative electrode current collector coated with the first negative electrode slurry and the second negative electrode slurry was dried and then roll-pressed to manufacture a negative electrode. The manufactured negative electrode had a porosity of 29%.

A positive electrode and a lithium secondary battery were manufactured in the same manner as in Example 1, except that the above-described negative electrode was used.

**Example 3**

A positive electrode, a negative electrode, and a lithium secondary battery were manufactured in the same manner as in Example 2, except that a single-particle type $Li[Ni_{0.60}Co_{0.10}Mn_{0.30}]O_2$ having an average particle diameter $D_{50}$ of 7.6 $\mu$m was used as the positive electrode active material. The manufactured positive electrode had a porosity of 22%.

**Example 4**

<Manufacturing of positive electrode>

A positive electrode was manufactured in the same manner as in Example 1, except that a positive electrode slurry was prepared such that the positive electrode active material : the positive electrode conductive material : the positive electrode binder : the positive electrode dispersant were included at a weight ratio of 97.24 : 1.2 :1.35 : 0.21. The manufactured positive electrode had a porosity of 22%.

A negative electrode and a lithium secondary battery were manufactured in the same manner as in Example 2, except that the above-described positive electrode was used.

**Example 5**

<Manufacturing of positive electrode>

A positive electrode was manufactured in the same manner as in Example 1, except that the positive electrode was manufactured to have a porosity of 22%.

<Manufacturing of negative electrode>

A negative electrode was manufactured in the same manner as in Example 1, except that the negative electrode was manufactured to have a porosity of 28%.

<Manufacturing of lithium secondary battery>

A lithium secondary battery was manufactured in the same manner as in Example 1 except that the positive electrode and the negative electrode which were manufactured above were used.

**Comparative Example 1**

<Manufacturing of negative electrode>

A first negative electrode active material (artificial graphite:natural graphite = 50:50) : a first negative electrode conductive material (super C) : a thickener (carboxymethyl cellulose (CMC)) : a first negative electrode binder (styrene butadiene rubber (SBR)) were mixed in water at a weight ratio of 95.2 : 0.5 : 1.0 : 3.3 to prepare a first negative electrode slurry.
A second negative electrode active material (artificial graphite:natural graphite = 50:50) : a second negative electrode conductive material (super C) : a thickener (carboxymethyl cellulose (CMC)) : a second negative electrode binder (styrene butadiene rubber (SBR)) were mixed in water at a weight ratio of 97.4 : 0.5 : 1.1 : 1.0 to prepare a second negative electrode slurry.
The first negative electrode slurry and the second negative electrode slurry were simultaneously coated on a negative electrode current collector (a copper metal thin film), wherein the first negative electrode slurry was disposed on the negative electrode current collector, and the second negative electrode slurry was disposed on the first negative electrode slurry. Thereafter, the negative electrode current collector coated with the first negative electrode slurry and the second negative electrode slurry was dried and then roll-pressed to manufacture a negative electrode. The manufactured negative electrode had a porosity of 27%.
A positive electrode, a negative electrode, and a lithium secondary battery were manufactured in the same manner as in Example 1, except that the above-described negative electrode was used.

**Comparative Example 2**

A positive electrode, a negative electrode, and a lithium secondary battery were manufactured in the same manner as in Example 2, except that the first negative electrode active material (artificial graphite:natural graphite = 25:75) : the first negative electrode conductive material (super C) : the thickener (carboxymethyl cellulose (CMC)) : the first negative electrode binder (styrene butadiene rubber (SBR)) were mixed in water at a weight ratio of 93.5 : 0.5 : 1.0 : 5.0 to prepare the first negative electrode slurry. The manufactured negative electrode had a porosity of 26%.

**Comparative Example 3**

A positive electrode, a negative electrode, and a lithium secondary battery were manufactured in the same manner as in Example 2, except that the first negative electrode active material (artificial graphite:natural graphite = 25:75) : the first negative electrode conductive material (super C) : the thickener (carboxymethyl cellulose (CMC)) : the first negative electrode binder (styrene butadiene rubber (SBR)) were mixed in water at a weight ratio of 97.5 : 0.5 : 1.0 : 1.0 to prepare the first negative electrode slurry. The manufactured negative electrode had a porosity of 29%.

**Comparative Example 4**

A positive electrode, a negative electrode, and a lithium secondary battery were manufactured in the same manner as in Example 2, except that a single-particle type $Li[Ni_{0.60}Co_{0.10}Mn_{0.30}]O_2$ having an average particle diameter $D_{50}$ of 8.0 $\mu$m was used as the positive electrode active material. The manufactured positive electrode had a porosity of 22%.

**Comparative Example 5**

<Manufacturing of negative electrode>

A negative electrode active material (artificial graphite:natural graphite = 50:50) : a negative electrode conductive material (super C) : a thickener (carboxymethyl cellulose (CMC)) : a negative electrode binder (styrene butadiene rubber (SBR)) were mixed in water at a weight ratio of 96.8 : 0.5 : 1.0 : 1.7 to prepare a negative electrode slurry.

The negative electrode slurry was coated on a negative electrode current collector (a copper metal thin film), dried, and the roll-pressed to manufacture a negative electrode. The manufactured negative electrode had a porosity of 29%.

A positive electrode, a negative electrode, and a lithium secondary battery were manufactured in the same manner as in Example 2, except that the above-described negative electrode was used.

**Comparative Example 6**

A positive electrode, a negative electrode, and a lithium secondary battery were manufactured in the same manner as in Example 2, except that a single-particle type $Li[Ni_{0.60}Co_{0.10}Mn_{0.30}]O_2$ having an average particle diameter $D_{50}$ of 2.2 $\mu$m was used as the positive electrode active material. The manufactured positive electrode had a porosity of 22%.

**Comparative Example 7**

<Manufacturing of positive electrode>

A positive electrode was manufactured in the same manner as in Example 1, except that the positive electrode was manufactured to have a porosity of 22%.

<Manufacturing of negative electrode>

A negative electrode was manufactured in the same manner as in Example 1, except that the negative electrode was manufactured to have a porosity of 32%.

<Manufacturing of lithium secondary battery>

A lithium secondary battery was manufactured in the same manner as in Example 1 except that the positive electrode and the negative electrode which were manufactured above were used.

**Comparative Example 8**

<Manufacturing of positive electrode>

A positive electrode was manufactured in the same manner as in Example 1, except that the positive electrode was manufactured to have a porosity of 22%.

<Manufacturing of negative electrode>

A negative electrode was manufactured in the same manner as in Example 1, except that the negative electrode was manufactured to have a porosity of 26%.

<Manufacturing of lithium secondary battery>

A lithium secondary battery was manufactured in the same manner as in Example 1 except that the positive electrode and the negative electrode which were manufactured above were used.

**Experimental Example 1: Evaluation of FBR value, negative electrode binder, and porosity**

(1) Measurement of FBR value

For the lithium secondary batteries manufactured in Examples 1 to 5 and Comparative Examples 1 to 8, the FBR value, which is defined by Equation 1 below, was measured. The results are shown in Table 1 below.

$$[\text{Equation 1}]$$

$$FBR = [(Rb \times TDb) + (Rd \times TDd)] \times A^2$$

The Rb is a dimensionless number of the ratio (wt%) of the positive electrode binder, the Rd is a dimensionless number of the ratio (wt%) of the positive electrode dispersant, the TDb is a dimensionless number of the true density (g/cc) of the positive electrode binder, the TDd is a dimensionless number of the true density (g/cc) of the positive electrode dispersant, and the A is a dimensionless number of the average particle diameter ($D_{50}$, $\mu$m) of the positive electrode active material.

(2) Evaluation of negative electrode binder, and porosity

The ratio of the first negative electrode binder content to the second negative electrode binder content of the negative electrode of the lithium secondary battery manufactured in each of Examples 1 to 5 and Comparative Examples 1 to 8, the total content of the binder in the negative electrode, and the difference in porosity between the positive electrode and the negative electrode shown in Table 1 below.

[Table 1]

| | Positive electrode | | Negative electrode | | |
|---|---|---|---|---|---|
| | $D_{50}$ ($\mu$m) | FBR | First negative electrode binder/ second negative electrode binder ratio | Total content of binder (wt%) | Difference in porosity between positive electrode and negative electrode (%) |
| Example 1 | 3.7 | 41.3 | 1.6 | 1.3 | 8 |
| Example 2 | 3.7 | 41.3 | 2.4 | 1.7 | 7 |
| Example 3 | 7.6 | 174.3 | 2.4 | 1.7 | 7 |
| Example 4 | 3.7 | 36.4 | 2.4 | 1.7 | 7 |
| Example 5 | 3.7 | 41.3 | 1.6 | 1.3 | 6 |
| Comparative Example 1 | 3.7 | 41.3 | 3.3 | 2.17 | 5 |
| Comparative Example 2 | 3.7 | 41.3 | 5 | 3.0 | 4 |
| Comparative Example 3 | 3.7 | 41.3 | 1 | 1.0 | 7 |
| Comparative Example 4 | 8.0 | 193 | 2.4 | 1.7 | 7 |
| Comparative Example 5 | 3.7 | 41.3 | - | 1.7 | 7 |
| Comparative Example 6 | 2.2 | 14.6 | 2.4 | 1.7 | 7 |
| Comparative Example 7 | 3.7 | 41.3 | 1.6 | 1.3 | 10 |
| Comparative Example 8 | 3.7 | 41.3 | 1.6 | 1.3 | 4 |

**Experimental Example 2. Evaluation of degree of binder migration**

For the negative electrodes manufactured in Examples 1 to 5 and Comparative Examples 1 to 8, the QBR value, which is defined by Equation 2 below, was measured. The results are shown in Table 2 below.

$$[\text{Equation 2}]$$

$$QBR = Bs\ /\ Bf$$

The Bs shows an average value of the binder content in a surface region of the negative electrode active material layer from the outermost surface of the second negative electrode active material layer to within 15% of the total thickness of the negative electrode active material layer, and the Bf shows an average value of the binder content in a bottom region of the negative electrode active material layer from an interface of the first negative electrode active material layer in contact with the negative electrode current collector to within 15% of the total thickness of the negative electrode active material layer.

At this time, the binder content was measured through the following procedure. Argon ion milling was used to produce a cross-section of the negative electrode. Thereafter, an energy dispersive X-ray spectroscopy (EDS) detector of scanning electron microscope (SEM) equipment was used to perform EDS mapping on the components in the negative electrode active material layer of the produced negative electrode cross-section. From the EDS mapping results, a line profile was extracted in the thickness direction of the negative electrode active material layer, and from the extracted line profile results, an average value Bs of the binder content of the surface region of the negative electrode active material layer and an average value Bf of the binder content of the bottom region of the negative electrode active material layer were extracted.

**Experimental Example 3. Evaluation of negative electrode adhesive force**

The negative electrodes manufactured in Examples 1 to 5 and Comparative Examples 1 to 8 were punched to a width of 20 mm and a length of 15 cm and attached to a slide glass by using double-sided tape, and then the negative electrodes were pressed with a constant pressure. Specifically, a 90° peel test was performed to confirm negative electrode adhesive force in the unit of gf/20 mm. The results are shown in Table 2 below.

[Table 2]

|  | QBR ($B_S/B_F$) | Negative electrode adhesive force (gf/20 mm) |
|---|---|---|
| Example 1 | 1.24 | 49.2 |
| Example 2 | 1.11 | 50.3 |
| Example 3 | 1.24 | 49.2 |
| Example 4 | 1.11 | 50.3 |
| Example 5 | 1.24 | 49.2 |
| Comparative Example 1 | 1.01 | 66.0 |
| Comparative Example 2 | 0.88 | 93.1 |
| Comparative Example 3 | 1.50 | 27.0 |
| Comparative Example 4 | 1.11 | 50.8 |
| Comparative Example 5 | 0.88 | 60.0 |
| Comparative Example 6 | 1.11 | 50.3 |
| Comparative Example 7 | 1.45 | 30.5 |
| Comparative Example 8 | 1.47 | 26.0 |

Referring to Table 2 above, compared to the lithium secondary battery manufactured in each of Comparative Examples 1 to 8, the lithium secondary battery manufactured in each of Examples 1 to 5 satisfies a QBR value of 1.1 to 1.28, so that it can be confirmed that the binder is uniformly distributed in the thickness direction in the entire negative electrode active material layer, and the adhesive force of the negative electrode is excellent.

**Experimental Example 4. Evaluation of rapid charging performance**

The lithium secondary batteries manufactured in Example 1 to 5 and Comparative Examples 1 to 8 were charged by a step charging method to measure the time (unit: min) taken to charge the batteries to SOC 8% to 80%. At this time, the step charging is a method of performing charging at a constant charging rate (C-rate), and then, when a certain voltage (4.35 V) is reached, lowering the charging rate to sequentially perform charging, and in the present invention, the charging was sequentially performed under the condition of a C-rate of $0.25\,C \rightarrow 0.5\,C \rightarrow 0.75\,C \rightarrow 1\,C \rightarrow 1.25\,C \rightarrow 1.5\,C \rightarrow 1.75\,C \rightarrow \rightarrow 2.25\,C \rightarrow 2.5\,C \rightarrow 2.75\,C \rightarrow 3\,C \rightarrow 3.25\,C$. The measurement results are shown in Table 3 below.

**Experimental Example 5. Evaluation of initial capacity and resistance properties**

At 25 °C, each of the lithium secondary batteries manufactured in Examples 1 to 5 and Comparative Examples 1 to 8 was charged to 4.35 V at 0.1 C, and then discharged to 2.5 V at 0.1 C to measure the initial capacity. At this time, the resistance was measured through changes in the voltage when a current of 2.5 C was applied for 10 seconds. The measurement results are shown in Table 3 below.

**Experimental Example 6. Evaluation of lifespan properties**

At 25 °C, each of the lithium secondary batteries manufactured in Examples 1 to 5 and Comparative Examples 1 to 8 was charged to 4.35 V at 0.33 C,1 and then discharged to 2.5 V at 0.33 C, the whole process of which was set to 1 cycle, and 200 cycles of the charge and discharge were performed to measure the capacity retention rate, so as to evaluate the lifespan properties. The measurement results are shown in Table 3 below.

[Table 3]

|  | Rapid charging (min)) | Initial capacity (mAh) | Initial resistance (ohm) | Capacity retention rate (%) |
|---|---|---|---|---|
| Example 1 | 29.9 | 47.1 | 1.54 | 96.4 |
| Example 2 | 35.3 | 56.9 | 1.632 | 96.5 |
| Example 3 | 29.9 | 47.0 | 1.65 | 96.0 |
| Example 4 | 35.3 | 47.5 | 1.5 | 96.0 |
| Example 5 | 30.2 | 47.0 | 1.6 | 96.6 |
| Comparative Example 1 | 40.8 | 47.1 | 1.642 | 96.6 |
| Comparative Example 2 | 45.3 | 46.5 | 1.703 | 96.8 |
| Comparative Example 3 | 27.8 | 47.3 | 1.489 | 95.8 |
| Comparative Example 4 | 35.4 | 45.0 | 1.780 | 95.7 |
| Comparative Example 5 | 40.3 | 46.5 | 1.680 | 95.7 |
| Comparative Example 6 | 35.3 | 46.5 | 1.63 | 95.8 |
| Comparative Example 7 | 27.5 | 43.2 | 2.3 | 93.0 |
| Comparative Example 8 | 27.0 | 40.0 | 3.0 | 89.5 |

Referring to Table 3 above, compared to the lithium secondary batteries manufactured in Comparative Examples 1 to 8, it can be confirmed that the lithium secondary batteries manufactured in Examples 1 to 5 are excellent in rapid charging properties, initial capacity, initial resistance, and capacity retention rate at the same time.

**Claims**

1.    A lithium secondary battery comprising:

a positive electrode including a positive electrode active material layer which includes a single-particle type positive electrode active material, a positive electrode conductive material, a positive electrode binder, and a positive electrode dispersant; a negative electrode; and an electrolyte, wherein:

the negative electrode includes a first negative electrode active material layer formed on a negative electrode current collector and including a first negative electrode active material, a first negative electrode conductive material, and a first negative electrode binder, and a second negative electrode active material layer formed on the first negative electrode active material layer and including a second negative electrode active material, a second negative electrode conductive material, and a second negative electrode binder; wherein:

the first negative electrode active material and the second negative electrode active material each independently include natural graphite, artificial graphite, or a combination thereof; and the ratio of the content of the first negative electrode binder to the content of the second negative electrode binder is 1.5 to 3.0, and

the difference in porosity between the positive electrode and the negative electrode is 4.2% to 9.8%; and the positive electrode has a value of FBR, which is defined by Equation 1 below, of 30 to 180:

[Equation 1]

$$FBR = [(Rb \times TDb) + (Rd \times TDd)] \times A^2$$

wherein in Equation 1 above,

Rb is a dimensionless number of the weight% of the positive electrode binder with respect to the total weight of the positive electrode active material layer,

Rd is a dimensionless number of the weight % of the positive electrode dispersant with respect to the total weight of the positive electrode active material layer,

TDb is a dimensionless number of the true density (g/cc) of the positive electrode binder,

TDd is a dimensionless number of the true density (g/cc) of the positive electrode dispersant, and

A is a dimensionless number of the average particle diameter ($D_{50}$, $\mu$m) of the positive electrode active material.

2. The lithium secondary battery of claim 1, wherein the single-particle type positive electrode active material comprises a lithium nickel-based oxide including Ni in an amount of 70 mol% or less based on the total number of moles of metals excluding lithium.

3. The lithium secondary battery of claim 1, wherein the single-particle type positive electrode active material comprises a lithium nickel-based oxide represented by [Formula 1] below:

[Formula 1]     $Li_{1+x}[Ni_aCo_bMn_cM^1_d]O_2$

wherein in [Formula 1] above, $M^1$ includes one or more doping elements selected from the group consisting of Ti, Mg, Al, Zr, Y, Ba, Ca, Sr, W, Ta, Nb, and Mo, and $-0.1 \leq x \leq 0.1$, $0.5 \leq a \leq 0.7$, $0 < b < 0.5$, $0 < c < 0.5$, and $0 \leq d \leq 0.2$.

4. The lithium secondary battery of claim 1, wherein the single-particle type positive electrode active material has an average particle diameter ($D_{50}$) of 3.5 $\mu$m to 7.8 $\mu$m.

5. The lithium secondary battery of claim 1, wherein the single-particle type positive electrode active material comprises 1 to 30 nodules.

6. The lithium secondary battery of claim 5, wherein the nodules have an average particle diameter ($D_{Mean}$) of 0.8 $\mu$m to 4.0 $\mu$m.

7. The lithium secondary battery of claim 1, wherein the positive electrode active material layer comprises the positive electrode binder in an amount of 0.5 wt% to 2 wt%.

8. The lithium secondary battery of claim 1, wherein the positive electrode has a porosity of 20% to 25%.

9. The lithium secondary battery of claim 1, wherein the first negative electrode active material and the second negative electrode active material each independently consi st of natural graphite, artificial graphite, or a combination thereof.

10. The lithium secondary battery of claim 1, wherein:

the first negative electrode active material comprises the natural graphite in an amount of greater than 50 wt%; and

the second negative electrode active material comprises the natural graphite in an amount of less than 50 wt%.

11. The lithium secondary battery of claim 1, wherein the ratio of the content of the first negative electrode binder to the content of the second negative electrode binder is 1.6 to 2.4.

12. The lithium secondary battery of claim 1, wherein the first negative electrode active material layer comprises the first negative electrode binder in an amount of 1.5 wt% to 3.0 wt%.

13. The lithium secondary battery of claim 1, wherein the negative electrode has a value of QBR, which is defined by Equation 2 below, of 1.1 to 1.28:

[Equation 2]

$$QBR = Bs\ /\ Bf$$

wherein, the Bs is an average value of the binder content in a surface region of the negative electrode active material layer from the outermost surface of the second negative electrode active material layer to within 15% of the total thickness of the negative electrode active material layer, and
the Bf is an average value of the binder content in a bottom region of the negative electrode active material layer from an interface of the first negative electrode active material layer in contact with the negative electrode current collector to within 15% of the total thickness of the negative electrode active material layer.

14. The lithium secondary battery of claim 1, wherein the negative electrode has a porosity of 25% to 32%.

15. The lithium secondary battery of claim 1, wherein the difference in porosity between the positive electrode and the negative electrode is 6% to 8%

## INTERNATIONAL SEARCH REPORT

| International application No. |
| --- |
| **PCT/KR2024/020979** |

| A. | CLASSIFICATION OF SUBJECT MATTER |
| --- | --- |

**H01M 10/052**(2010.01)i; **H01M 4/525**(2010.01)i; **H01M 4/505**(2010.01)i; **H01M 4/587**(2010.01)i; **H01M 4/62**(2006.01)i; **C30B 29/22**(2006.01)i

According to International Patent Classification (IPC) or to both national classification and IPC

| B. | FIELDS SEARCHED |
| --- | --- |

Minimum documentation searched (classification system followed by classification symbols)

H01M 10/052(2010.01); H01M 10/0525(2010.01); H01M 10/42(2006.01); H01M 4/13(2010.01); H01M 4/139(2010.01); H01M 4/525(2010.01); H01M 50/10(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지 (lithium secondary battery), 단입자 (single particle), 공극률 (porosity), 도전재 (conductive material), 흑연 (graphite), 바인더 (binder)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2017-0111743 A (LG CHEM, LTD.) 12 October 2017 (2017-10-12) See abstract; paragraphs [0010], [0029], [0048], [0093], [0099], [0142], [0144], [0149], [0153], [0173], [0181], [0185] and [0209]; and claims 1 and 2. | 1-15 |
| Y | KR 10-2023-0038122 A (LG ENERGY SOLUTION, LTD.) 17 March 2023 (2023-03-17) See abstract; paragraphs [0011], [0024], [0063], [0119], [0121] and [0122]; and claim 1. | 1-15 |
| Y | KR 10-2020-0089239 A (LG CHEM, LTD.) 24 July 2020 (2020-07-24) See paragraphs [0040], [0042], [0054], [0073], [0074], [0158] and [0162]; and claims 2 and 3. | 1-15 |
| Y | KR 10-2018-0009084 A (LG CHEM, LTD.) 26 January 2018 (2018-01-26) See paragraphs [0065] and [0075]; and claim 7. | 10 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 March 2025** | **31 March 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/020979**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2022-0036961 A (CONTEMPORARY AMPEREX TECHNOLOGY CO., LIMITED) 23 March 2022 (2022-03-23)<br>See abstract; paragraphs [0080], [0103] and [0134]-[0136]; and claims 1, 6-9 and 11. | 1-15 |

Form PCT/ISA/210 (second sheet) (July 2022)

22

## INTERNATIONAL SEARCH REPORT
### Information on patent family members

International application No.

**PCT/KR2024/020979**

| Patent document cited in search report | | | Publication date (day/month/year) | Patent family member(s) | | | Publication date (day/month/year) |
|---|---|---|---|---|---|---|---|
| KR | 10-2017-0111743 | A | 12 October 2017 | KR | 10-2111480 | B1 | 15 May 2020 |
| KR | 10-2023-0038122 | A | 17 March 2023 | CN | 117957673 | A | 30 April 2024 |
| | | | | EP | 4383372 | A1 | 12 June 2024 |
| | | | | EP | 4383372 | A4 | 30 October 2024 |
| | | | | JP | 2024-535751 | A | 02 October 2024 |
| | | | | KR | 10-2667663 | B1 | 22 May 2024 |
| | | | | US | 2023-0086038 | A1 | 23 March 2023 |
| | | | | WO | 2023-038472 | A1 | 16 March 2023 |
| KR | 10-2020-0089239 | A | 24 July 2020 | CN | 113273014 | A | 17 August 2021 |
| | | | | CN | 113273014 | B | 10 January 2025 |
| | | | | EP | 3893314 | A1 | 13 October 2021 |
| | | | | EP | 3893314 | B1 | 26 July 2023 |
| | | | | JP | 2022-517927 | A | 11 March 2022 |
| | | | | JP | 7242120 | B2 | 20 March 2023 |
| | | | | KR | 10-2605649 | B1 | 24 November 2023 |
| | | | | US | 12183930 | B2 | 31 December 2024 |
| | | | | US | 2022-0102731 | A1 | 31 March 2022 |
| | | | | WO | 2020-149679 | A1 | 23 July 2020 |
| KR | 10-2018-0009084 | A | 26 January 2018 | CN | 108140811 | A | 08 June 2018 |
| | | | | CN | 108140811 | B | 16 November 2021 |
| | | | | EP | 3335260 | A1 | 20 June 2018 |
| | | | | EP | 3335260 | B1 | 30 August 2023 |
| | | | | JP | 2018-533836 | A | 15 November 2018 |
| | | | | JP | 6661779 | B2 | 11 March 2020 |
| | | | | KR | 10-2034809 | B1 | 21 October 2019 |
| | | | | US | 11495780 | B2 | 08 November 2022 |
| | | | | US | 2018-0205064 | A1 | 19 July 2018 |
| | | | | WO | 2018-016785 | A1 | 25 January 2018 |
| KR | 10-2022-0036961 | A | 23 March 2022 | CN | 112563559 | A | 26 March 2021 |
| | | | | CN | 115295791 | A | 04 November 2022 |
| | | | | EP | 3955358 | A1 | 16 February 2022 |
| | | | | EP | 3955358 | B1 | 20 March 2024 |
| | | | | EP | 3955358 | C0 | 20 March 2024 |
| | | | | JP | 2022-534453 | A | 29 July 2022 |
| | | | | JP | 7196364 | B2 | 26 December 2022 |
| | | | | KR | 10-2502618 | B1 | 24 February 2023 |
| | | | | US | 11646415 | B2 | 09 May 2023 |
| | | | | US | 2022-0166018 | A1 | 26 May 2022 |
| | | | | WO | 2021-057428 | A1 | 01 April 2021 |

Form PCT/ISA/210 (patent family annex) (July 2022)

**EP 4 769 609 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230191346